# EUROPEAN PATENT SPECIFICATION

(11) **EP 1 914 855 B1**
(45) Date of publication and mention of the grant of the patent: **24.11.2010**
(21) Application number: 07020244.5
(22) Date of filing: 16.10.2007
(51) Int. Cl.: H02G 3/08, F16B 19/00

(54) **A vehicle-mountable electrical connection box and mounting method therefor**
An einem Fahrzeug montierbarer elektrischer Verbindungskasten und Verfahren dafür
Boîtier de connexion électrique pour installation sur véhicule et son procédé d'installation

(30) Priority: 20.10.2006 JP 2006286777
(43) Date of publication of application: 23.04.2008
(73) Proprietor: Sumitomo Wiring Systems, Ltd., Yokkaichi-city, Mie 510-8503 (JP)
(72) Inventor: Suzuki, Tatsuo, Yokkaichi-City MIE 510-8503 (JP)
(74) Representative: Müller-Boré & Partner Patentanwälte

(56) References cited:
- WO-A-99/54973
- US-A1- 2005 082 449
- US-A1- 2005 145 409

## Description

The present invention relates to a vehicle-mountable electrical connection box and to a mounting method therefor and is designed to improve the strength of a connecting portion of an electrical connection box and a vehicle body panel in the electrical connection box to be fixed only at one end to the vehicle body panel with locking clips.

Upon fixing a large-size electrical connection box such as a junction box to a vehicle body panel, a vehicle body mounting portion is caused to project from the electrical connection box and bolt-fastened to the vehicle body panel in many cases. However, an operator might have to perform a bolt tightening operation in a narrow and dark space in an improper posture, which imposes a burden on the operator. There are also problems of an increased number of parts and a higher cost.

Accordingly, there has been proposed a connecting construction for an electrical connection box enabling the electrical connection box to be simply fixed to the vehicle body panel without bolt tightening by causing locking clips to project from a side wall of the electrical connection box and inserting and engaging the locking clips into and with locking holes formed in the vehicle body panel.

However, an excessive force is exerted to the clips due to an impact or vibration generated during the travel of the vehicle in the case of fixing the electrical connection box only using the clips, particularly in the case of fixing only one side of a large-size electrical connection box to the vehicle body, which might lead to the damage of the clips.

As a construction for connecting the electrical connection box of this type with another member using locking members, the present applicant proposed a connecting construction for a junction box and an additional electrical connection box, for example, in Japanese Unexamined Patent Publication No. 2003-333728.

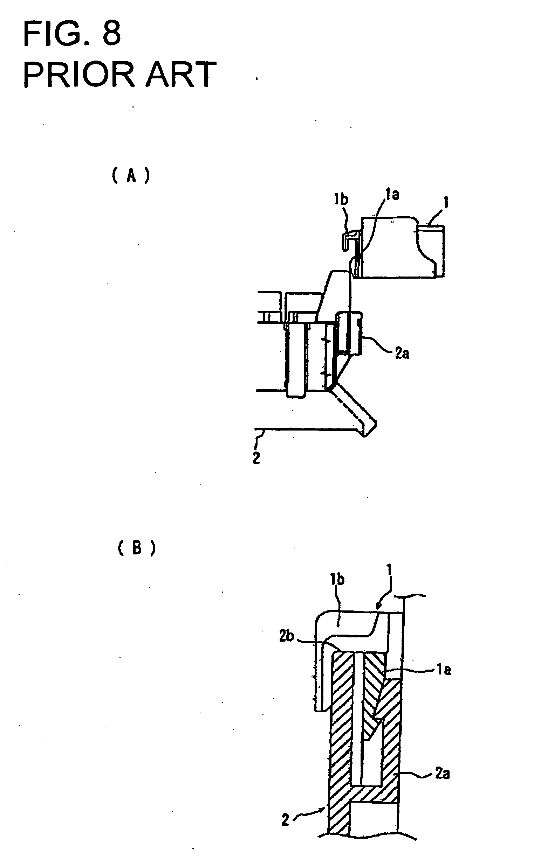

As shown in FIG. 8, this connecting construction is such that a locking portion 1 a is provided on a side wall of an additional electrical connection box 1, an L-shaped hook 1 b engageable with the upper end of a side wall of a junction box main body 2 at the time of connection projects from this side wall of the additional electrical connection box 1, the locking portion 1a is slid into engagement with an engaging portion 2a of the junction box main body 2, and the hook 1 b is engaged with an upper wall 2b of the junction box main body 2 in the same direction as the sliding direction.

In the above connecting construction, pressing loads upon accommodating electrical components into the additional electrical connection box act not only on the locking portion 1 a and the engaging portion 2a, but also on the hook 1 b by providing the hook 1b. This prevents the breakage of a connecting part of the junction box main body 2 and the additional electrical connection box 1.

However, clearances need to be defined between the locking portion 1 a and the hook 1b and the engaging portion 2a or the upper wall 2b of the junction box main body 2 in terms of design. Thus, there are problems that the additional electrical connection box 1 might shake due to an impact or vibration during the travel of the vehicle to break the connecting part of the junction box main body 2 and the additional electrical connection box 1 and noise is generated because of shaking movements.

US 2005/145409 A1 discloses a fixing structure box comprising a pair of first fixing members in a L-shape and a second fixing member equipped with a flexible arm.

WO 99/54973 A discloses a quick connect relay module comprising an attachment portion for detachably securing the housing to a surface, such as a circuit board.

US 2005/082449 A1 describes a locking structure for a clamp which is formed with a projecting component to be fixed to a counterpart member through a through hole of the counterpart member via locking wings.

The present invention was developed in view of the above problems, and an object thereof is to prevent the breakage of one or more locking clips and shaking movements by reinforcing a connecting part of a vehicle body panel and an electrical connection box.

This object is solved according to the invention by the features of the independent claims. Preferred embodiments of the invention are subject pf the dependent claims.

According to the invention, there is provided an electrical connection box to be mounted on a vehicle by being fixed only at one end by at least partly inserting at least one locking clip (or one or more locking clips) projecting from one side wall of a casing thereof into at least one respective locking hole (or one or more respective locking holes) of a vehicle body panel to be locked in position, wherein:
the locking clip is a bladed clip in which one or more blade portions are provided on a shaft portion projecting from the side wall; and
a protection wall having one or more squeezable ribs projecting from the outer surface(s) thereof is formed adjacent to the at least one bladed clip (or the one or more bladed clips) to project from the side wall and is pressable at least partly into an opening formed adjacent to the at least one locking hole (or the one or more locking holes) of the vehicle body panel corresponding to the at least one bladed clip (or the one or more bladed clips) to be fixed while the one or more squeezable ribs are squeezed.

In the above construction, the protection wall is provided adjacent to the at least one bladed clip and at least partly pressed into the opening of the vehicle body panel while the one or more squeezable ribs formed on the protection wall are squeezed, whereby the engaging portions of the at least one bladed clip and the vehicle body panel are reinforced by the protection wall. Thus, in the case of mounting the electrical connection box on the vehicle body panel only at one end, the strength of a coupling part of the electrical connection box and the vehicle body panel can be improved and the electrical connection box can be firmly supported on the vehicle body panel. Therefore, the concentration of loads on the engaged parts of the at least one bladed clip and the vehicle body panel can be suppressed and the breakage of the at least one bladed clip can be reduced and prevented.

Upon exchanging electrical/electronic components such as fuses or relays or circuits mounted in the electrical connection box, forces to detach and insert these electrical/electronic components act as loads on the electrical connection box. Since the electrical connection box can be firmly and stably supported on the vehicle body panel, the electrical connection box is not shaken upon such loads and operability in exchanging components can be improved.

Further, since the electrical connection box can be fixed to the vehicle body panel only by inserting the at least one bladed clip and the protection wall into the at least one respective locking hole and the opening of the vehicle body panel in the electrical connection box, the operation can be facilitated to reduce burdens on an operator. Furthermore, the number of parts can be reduced by integrally or unitarily forming the electrical connection box with the at least one bladed clip.

According to a preferred embodiment of the invention, the one or more blade portions are folded back toward the lateral side, preferably substantially opposite sides, from the leading end of the shaft portion.

Preferably, one or more locking steps engageable with the peripheral edge of the locking hole is provided at or near the leading ends of the blade portions.

Further preferably, a pair of bladed clips are arranged on the side wall while being spaced apart.

Most preferably, the protection wall is formed substantially between the bladed clips to project from the side wall and is pressable at least partly into the opening formed substantially between the locking holes of the vehicle body panel corresponding to the pair of bladed clips to be fixed.

According to a further preferred embodiment of the invention, there is provided a vehicle-mountable electrical connection box to be fixed only at one end by inserting locking clips projecting from one side wall of a casing thereof into locking holes of a vehicle body panel to be locked in position, characterized in that:
each locking clip is a bladed clip in which blade portions are folded back toward the opposite sides from the leading end of a shaft portion projecting from the side wall, and locking steps engageable with the peripheral edge of the locking hole is provided at the leading ends of the blade portions;
a pair of bladed clips are arranged while being spaced apart; and
a protection wall having squeezable ribs projecting from the outer surfaces thereof is formed between the bladed clips to project from the side wall and is pressed into an opening formed between the locking holes of the vehicle body panel corresponding to the pair of bladed clips to be fixed while the squeezable ribs are squeezed.

In the above construction, the protection wall is provided between the bladed clips arranged while being spaced apart, and pressed into the opening of the vehicle body panel while the squeezable ribs formed on the protection wall are squeezed, whereby the engaging portions of the bladed clips and the vehicle body panel are reinforced by the protection wall. Thus, in the case of mounting the electrical connection box on the vehicle body panel only at one end, the strength of a coupling part of the electrical connection box and the vehicle body panel can be improved and the electrical connection box can be firmly supported on the vehicle body panel. Therefore, the concentration of loads on the engaged parts of the bladed clips and the vehicle body panel can be suppressed and the breakage of the bladed clips can be reduced and prevented.

Upon exchanging electrical components such as fuses or relays mounted in the electrical connection box, forces to detach and insert these electrical components act as loads on the electrical connection box. Since the electrical connection box can be firmly and stably supported on the vehicle body panel, the electrical connection box is not shaken upon such loads and operability in exchanging components can be improved.

Further, since the electrical connection box can be fixed to the vehicle body panel only by inserting the bladed clips and the protection wall into the locking holes and the opening of the vehicle body panel in the above electrical connection box, the operation can be facilitated to reduce burdens on an operator. Furthermore, the number of parts can be reduced by integrally or unitarily forming the electrical connection box with the bladed clips.

Preferably, one of the pair of bladed clips is formed with the squeezable rib at either one of the upper and lower ends of the shaft portion and has a press-contact piece having the squeezable rib provided at a position distanced from the other of the upper and lower ends, and the one bladed clip and the corresponding press-contact piece are pressed into contact with the upper and lower inner surfaces of the corresponding locking hole while the squeezable ribs at the upper and lower sides are squeezed at the time of insertion into the locking hole, and
the other bladed clip has a press-contact piece and the squeezable rib at positions substantially vertically symmetrical with the one bladed clip.

By adopting the above construction, the bladed clips and the press-contact pieces can be closely pressed into the locking holes to be fixed since the bladed clips have the squeezable ribs at the upper and lower sides. Thus, the electrical connection box is not shaken by an impact or vibration during the travel of a vehicle, the breakage of the bladed clips can be prevented, and noise generation can be prevented.

Further, by preferably providing the press-contact pieces at the substantially vertically symmetrical positions of the pair of bladed clips, the direct contact of another object with the bladed clips can be prevented with the electrical connection box detached from the vehicle body panel, and the breakage of the bladed clips can be prevented in the case of externally exerting forces as loads to the electrical connection box with the electrical connection box mounted on the vehicle body panel.

Preferably, one or more biasing members, preferably comprising one or more bent spring pieces, project at one or more lateral sides, preferably at the substantially opposite left and right sides, of the protection wall and the leading end surfaces thereof are pressable against the outer surface of the vehicle body panel.

Since the one or more bladed clips are at least partly insertable into the one or more respective locking holes, clearances of about 0.8 mm to about 1.0 mm are advantageous in terms of design between the locking steps of the bladed clips and the vehicle body panel at the time of insertion into the vehicle body panel.

According to the above, as the one or more bladed clips are at least partly inserted into the one or more respective locking holes, the biasing members (preferably the spring pieces) are resiliently deformed by being pushed by the vehicle body panel. When the bladed clips are passed through the locking holes, the above clearances are formed between the one or more locking steps of the one or more bladed clips and the vehicle body panel. However, since forces to bias or pull the one or more bladed clips out act as loads on the electrical connection box by the biasing action of the biasing members (preferably by the resilient restoring forces of the spring pieces), the one or more locking steps of the one or more bladed clips are biased or pressed towards or against the vehicle body panel. The resilient deformations of the spring pieces absorb or compensate or reduce the clearances between the locking steps of the bladed clips and the vehicle body panel in this way, wherefore shaking movements caused by the clearances can be prevented to prevent noise generation.

Preferably, one or more reinforcing ribs to be pressed against the outer surface of the vehicle body panel, preferably from the upper and/or lower surfaces of the casing, project from the side wall(s), preferably from the substantially opposite longitudinal ends of the side wall of the casing, where the one or more bladed clips and the protection wall are provided.

Upon attaching or detaching electronic components such as fuses, relays or connectors to or from the electrical connection box, forces vertically act as loads on the electrical connection box. If the reinforcing ribs vertically project as in the present invention, the vertical forces acting upon attaching or detaching the electronic components can be supported by pressing the reinforcing ribs against the vehicle body panel. Therefore, the breakage of the bladed clips can be prevented by protecting the bladed clips.

According to the invention, there is further provided a mounting method for mounting an electrical connection box, in particular according to the invention or a preferred embodiment thereof, on a vehicle body panel a vehicle by being fixed only at one end, comprising the following steps:
providing an electrical connection box having at least one locking clips projecting from one side wall of a casing thereof, wherein the locking clip is a bladed clip in which one or more blade portions are provided on a shaft portion projecting from the side wall,
at least partly inserting the at least one locking clip projecting from one side wall of the casing thereof into at least one respective locking hole of the vehicle body panel to be locked in position, and
at least partly pressing a protection wall having one or more squeezable ribs projecting from the outer surface(s) thereof and being formed adjacent to the at least one bladed clip to project from the side wall into an opening formed adjacent to the at least one locking hole of the vehicle body panel corresponding to the at least one bladed clip to be fixed while the one or more squeezable ribs are squeezed.

According to a preferred embodiment of the invention, the mounting method further comprises a step of engaging one or more locking steps provided at or near the leading ends of the blade portions with the peripheral edge of the locking hole.

Preferably, a pair of bladed clips is provided to be arranged on the side wall while being spaced apart, and wherein the protection wall is formed substantially between the bladed clips to project from the side wall and is pressed at least partly into the opening formed substantially between the locking holes of the vehicle body panel corresponding to the pair of bladed clips to be fixed.

As described above, the protection wall is provided between the pair of bladed clips and is engaged with the vehicle body panel using the bladed clips at the opposite sides thereof while the squeezable ribs are squeezed and pressed into the opening of the vehicle body panel. Thus, the electrical connection box can be firmly fixed without shaking in the case of being mounted on the vehicle body panel only at one end.

Further, since the squeezable ribs are provided at both upper and lower ends of the bladed clips themselves, the bladed clips and the press-contact pieces can be closely pressed into the locking holes. Thus, shaking movements of the electrical connection box due to an impact or vibration during the travel of the vehicle can be suppressed and the breakage of the bladed clips can be prevented.

Since the locking steps of the bladed clips are pressed against the vehicle body panel by providing the spring pieces at the opposite left and right sides of the protection wall, the clearances between the locking steps of the bladed clips and the vehicle body panel can be eliminated and shaking movements caused by these clearances can be prevented. Further, if the reinforcing ribs to be pressed against the outer surface of the vehicle body panel are caused to vertically project, vertical forces acting upon attaching or detaching an electronic component can also be supported by the reinforcing ribs. Therefore, the bladed clips can be reinforced and the breakage of the bladed clips can be prevented.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a front view showing a state where an electrical connection box according to the invention is mounted on a vehicle body panel,
FIG. 2 is a plan view showing the electrical connection box of FIG. 1,
FIG. 3(A) is a perspective view of the electrical connection box and FIG. 3(B) is an enlarged view showing an essential portion of FIG. 3(B),
FIGS. 4(A) to 4(C) are a plan view, a left side view and a bottom view of a bladed clip, respectively,
FIG. 5 is a plan view showing a protection wall and spring pieces,
FIG. 6 is an enlarged view showing a reinforcing rib,
FIGS. 7(A) and 7(B) are views showing a locking process of the electrical connection box and the vehicle body panel, wherein FIG. 7(A) shows a state where the bladed clips are passed through the vehicle body panel and FIG. 7(B) shows a state where locking steps of the bladed clips are engaged with the vehicle body panel, and
FIGS. 8 are views showing a prior art.

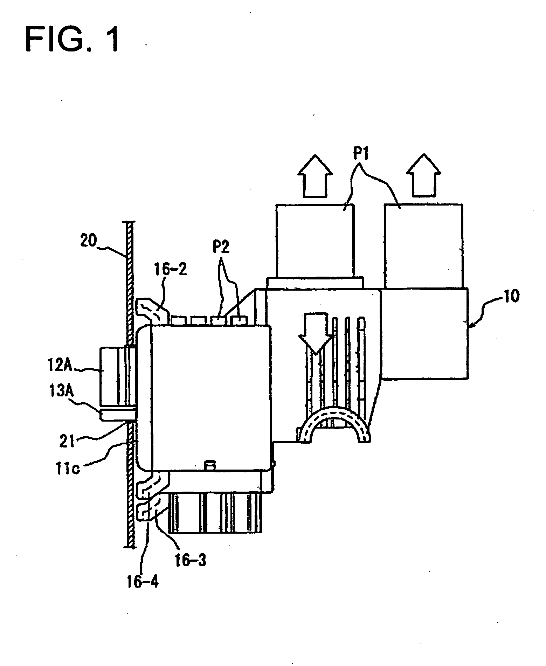

One preferred embodiment of the present invention is described with reference to FIGS. 1 to 7.

FIGS. 1 to 7 show the embodiment of the present invention.

An electrical connection box 10 of this embodiment is integrally or unitarily formed e.g. of a resin, and preferably is to be fixed only at one end to a frame element such as a vehicle body panel 20 preferably by at least partly inserting one or more locking clips 12 projecting from one side wall 11c into the vehicle body panel 20 as shown in FIG. 1.

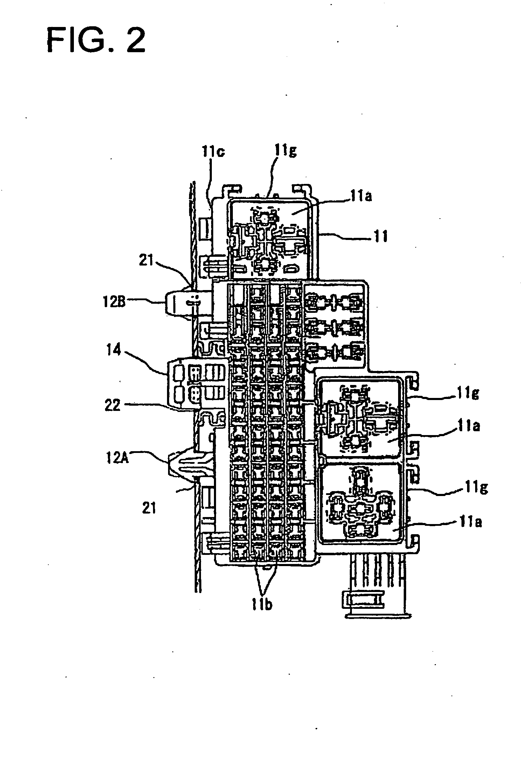

As shown in FIG. 2, the electrical connection box 10 comprises one or more electric/electronic part accommodating portions such as one or more relay accommodating portions 11a for at least partly accommodating one or more relays P1 and/or one or more fuse accommodating portions 11 b for at least partly accommodating fuses P2 are at least partly provided on the outer surface of a casing 11 of the electrical connection box 10. Further, a cassette portion 11 g for fixing a relay box or the like preferably is provided on the other side wall of the casing 11.

At the time of exchanging the electric/electronic part (such as the relay P1 or the fuse P2), the electric/electronic part (such as the relay P1 or the fuse P2) is or can be pulled out or withdrawn and a new one is or can be at least partly inserted with the electrical connection box 10 fixed to the vehicle body panel 20.

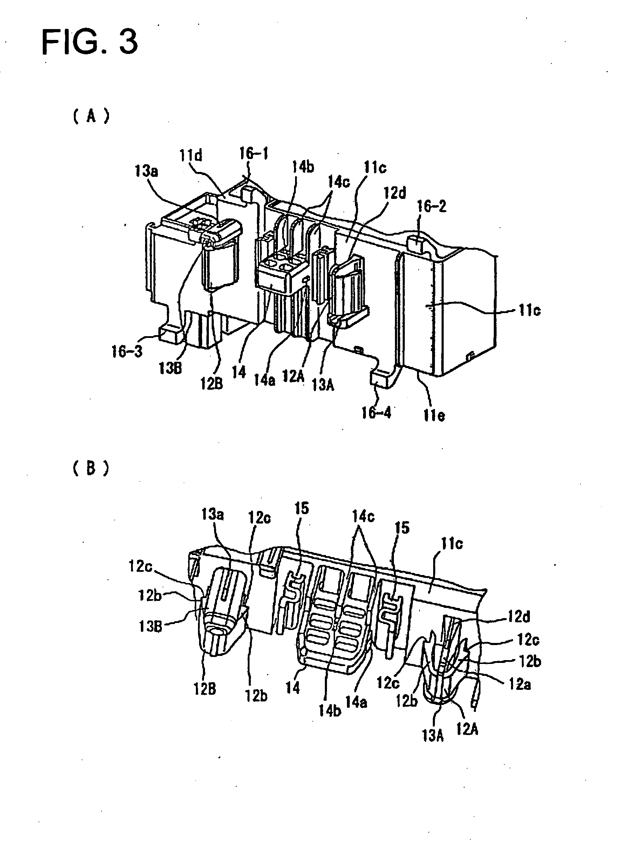

As shown in FIGS. 3(A) and 3(B), the one side wall 11c of the casing 11 is used as a vehicle body panel mounting surface and one or more, preferably a pair of lateral (left and/or right) locking clip(s) 12 (12A, 12B) project from the one side wall 11c while preferably being spaced apart from each other. A protection wall 14 preferably projects between the locking clips 12A, 12B, the electrical connection box 10 is to be lockingly fixed to the vehicle body panel 20 using these one or more locking clips 12A, 12B, and the protection wall 14 is at least partly pressed or inserted into an opening 22 made in the vehicle body panel 20.

The vehicle body panel 20 to which the electrical connection box 10 is to be fixed is formed with one or more, preferably a pair of locking holes 21 into which the respective locking clips 12A, 12B are to be lockingly fitted to be fixed, and the opening 22 at least partly into which the protection wall 14 between the locking clips 12A, 12B is pressed or inserted.

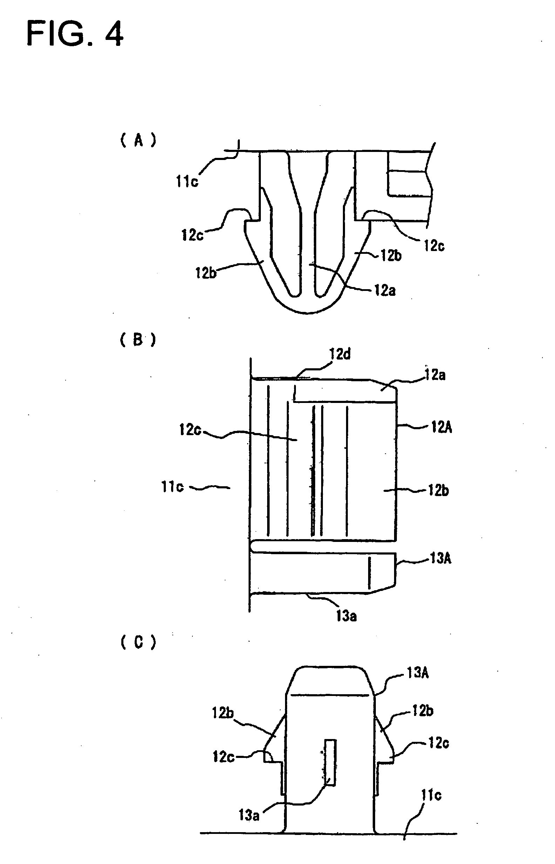

As shown in FIGS. 4(A) to 4(C), one locking clip 12A preferably is a bladed clip in which one or more blade portions 12b are provided (preferably substantially folded back to a lateral side, e.g. left and/or right) at or near the leading end of a shaft portion 12a projecting from the one side wall 11c, and one or more locking steps 12c engageable with the peripheral edge(s) of the locking holes 21 of the vehicle body panel 20 are provided at or near the leading ends of the blade portions 12b (hereinafter, the locking clips are referred to as bladed clips). A squeezable rib 12d having a narrow width is formed at or near the upper end of the shaft portion 12a to extend substantially toward the vehicle body panel 20.

A press-contact piece 13A projecting from the side wall 11c (preferably by the substantially same length as the bladed clip 12A) is provided at a position slightly distanced from the bottom end of the bladed clip 12A. As shown in FIG. 3(A), the press-contact piece 13A preferably has a cross section concave toward the bladed clip 12A. A squeezable rib 13a similar to the squeezable rib 12d of the bladed clip 12A is provided at or near the bottom end of the press-contact piece 13A. The bladed clip 12A and the press-contact piece 13A are pressed into contact with the (preferably upper and/or lower) inner surfaces of the locking hole 21 while at least partly squeezing the squeezable ribs 12d, 13a on the (preferably upper and/or bottom) sides of the bladed clip 12A and the press-contact piece 13.

The other bladed clip 12B has a squeezable rib 12d formed at or near the bottom end thereof, and a press-contact piece 13b is substantially disposed above and/or at a distance from the bladed clip 12B. The bladed clip 12B and the press-contact piece 13B preferably are substantially arranged vertically symmetrically with the bladed clip 12A and the press-contact piece 13A.

The protection wall 14 preferably has a substantially rectangular parallelepipedic shape, and has one or more squeezable ribs 14a, 14b projecting from the lateral (left and/or right and/or upper and/or lower) wall(s) thereof. One or more substantially rectangular ribs 14C preferably are provided to project from the side wall 11c of the casing 11 toward the upper and/or lower walls 11d, 11e of the protection wall 14 to enhance the strength of the protection wall 14 substantially in or along vertical direction.

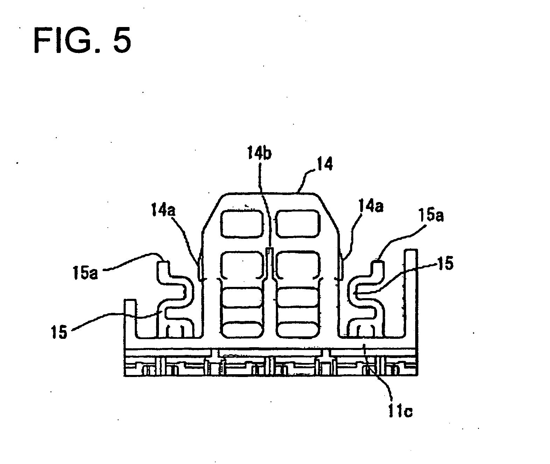

As shown in FIG. 5, one or more, preferably a pair of spring pieces 15 (as preferred biasing members) formed by bending one or more plates extending from the side wall 11c of the casing 11 to have a wavy or sinusoidal shape project at the (preferably substantially opposite) lateral (left and/or right) side(s) of the protection wall 14 while being spaced apart from the protection wall 14. The spring pieces 15 have such a length as to be pressed or pressable against the vehicle body panel 20 with the vehicle body panel 20 engaged with the locking steps 12c of the bladed clips 12, and leading end surfaces 15a of the springs pieces 15 preferably are pressed or pressable against the outer surface of the vehicle body panel 20 with the spring pieces 15 resiliently deformed as shown in FIG. 2.

Two each of reinforcing ribs 16 (16-1 to 16-4) to be pressed against the outer surface of the vehicle body panel 20 from the upper and/or lower surfaces 11 d, 11e of the casing 11 project from preferably each of the opposite longitudinal ends of the side wall 11c of the casing 11 provided with the bladed clips 12A, 12B and the protection wall 14.

The positions of the reinforcing ribs 16-1 to 16-4 preferably differ between the reinforcing ribs 16-1, 16-2 projecting from the casing upper surface 11 d and those 16-3, 16-4 projecting from the casing lower surface 11e, whereby the reinforcing ribs 16-1 to 16-4 are in an offset arrangement.

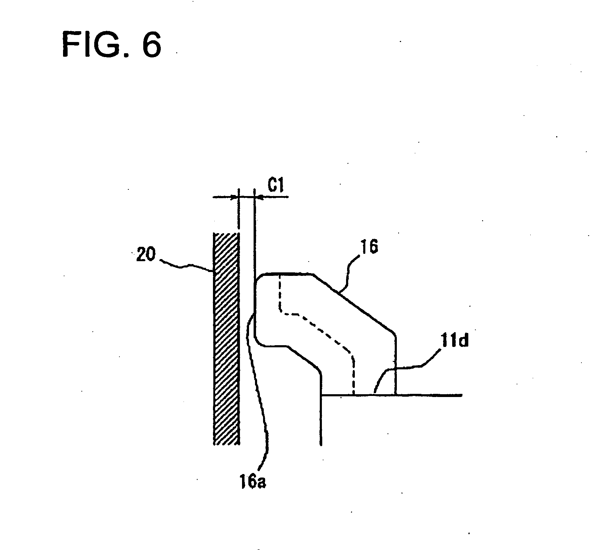

Each reinforcing rib 16 preferably has a substantially rectangular or polygonal cross section and projects (preferably substantially in a bent or curved manner) from the casing upper surface 11d or lower surface 11e toward the vehicle body panel 20, and the leading end thereof serves as a vehicle body panel contact surface 16a substantially in parallel with the vehicle body panel 20. As shown in FIG. 6, the vehicle body panel contact surface 16a has a clearance C1 of less than about 2.0 mm (preferably of about 1.0 mm) to the vehicle body panel 20 with the electrical connection box 10 fixed to the vehicle body panel 20.

Upon at least partly inserting the relay P1 or fuse P2 in an inserting direction into the casing 11, the casing 11 supported only at one end to the vehicle body panel 20 receives a moment or movement acting substantially in the insertion direction (e.g. downward) with the bladed clips 12A, 12B and the protection wall 14 as supporting points, with the result that the one or more vehicle body panel contact surfaces 16a of the one or more reinforcing ribs 16-3, 16-4 projecting from the lower surface 11e of the casing 11 come substantially into contact with the vehicle body panel 20.

Upon pulling the relay P1 or fuse P 2 out in a removing direction from the casing 11, the casing 11 receives a moment or movement acting substantially in the removing direction (e.g. upward) with the bladed clips 12A, 12B and the protection wall 14 as supporting points, with the result that the one or more vehicle body panel contact surfaces 16a of the one or more reinforcing ribs 16-1, 16-2 projecting from the upper surface 11 d of the casing 11 come substantially into contact with the vehicle body panel 20.

Next, a locking construction of the electrical connection box 10 and the vehicle body panel 20 is described.

The bladed clips 12A, 12B and the press-contact pieces 13A, 13B are at least partly inserted together into the locking holes 21 of the vehicle body panel 20 and pressed substantially into contact with the lateral (upper and/or lower) surface(s) of the locking holes 21 substantially while squeezing the squeezable ribs 12d formed on the bladed clips 12A, 12B and/or the squeezable ribs 13a formed on the press-contact pieces 13A, 13B. Simultaneously (or substantially simultaneously or concurrently), the protection wall 14 is at least partly inserted into the opening 22 formed adjacent to the locking hole(s) 21 (preferably substantially between the locking holes 21) of the vehicle body panel 20 and at least partly pressed or fitted therein preferably while the squeezable ribs 14a are squeezed. The spring pieces 15 are pressed against the vehicle body panel 20 to be resiliently deformed.

When the one or more locking steps 12c of the one or more bladed clips 12A, 12B pass through the locking holes 21, clearances C2 of less than about 2.0 mm (preferably of about 1.0 mm) are defined between the locking steps 12c of the bladed clips 12A and the vehicle body panel 20.

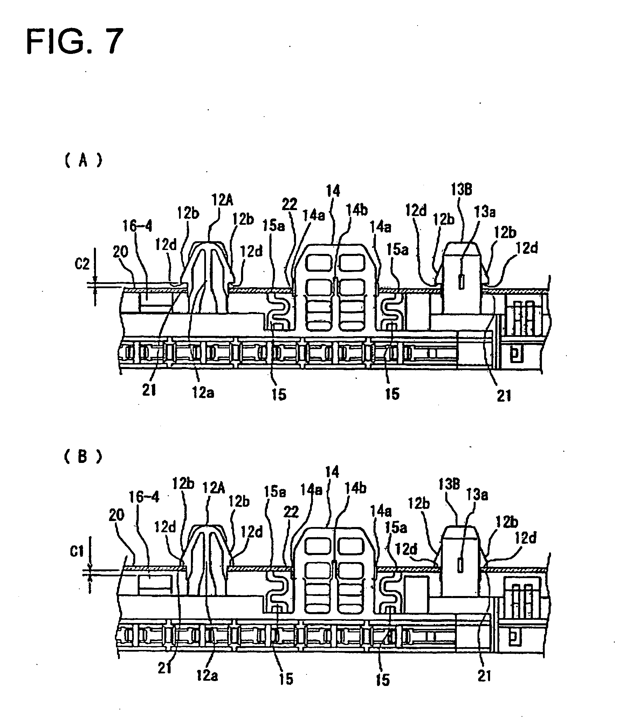

When the locking steps 12c of the bladed clips 12A, 12B pass through the locking holes 21, forces act in a direction to detach the bladed clips 12A, 12B by resilient restoring forces of the resiliently deformed spring pieces 15 as shown in FIG. 7(B), whereby the locking steps 12c are pressed substantially against the vehicle body panel 20. In this way, the clearances C2 between the locking steps 12c of the bladed clips 12A, 12B and the vehicle body panel 20 are absorbed or reduced or compensated by the resilient deformation of the spring pieces 15 and the locking steps 12c of the bladed clips 12A, 12B are engaged with the peripheral edges of the locking holes 21.

By adopting the above construction, the protection wall 14 is provided adjacent to, preferably substantially between the pair of bladed clips 12A, 12B and at least partly pressed into the opening 22 of the vehicle body panel 20, whereby the protection wall 14 reinforces the bladed clips 12a, 12B. Thus, the strength of the connecting part of the vehicle body panel 20 and the electrical connection box 10 can be enhanced and the breakage of the bladed clips 12A, 12B due to an impact or vibration during the travel of the vehicle can be prevented.

Further, by preferably providing the press-contact pieces 13A, 13B substantially at vertically symmetrical positions of the bladed clips 12A, 12B, the direct contact of another object with the bladed clips 12A and 12B can be prevented with the electrical connection box 10 detached from the vehicle body panel 20 and/or the breakage of the bladed clips 12A, 12B can be prevented if a force is externally exerted on the electrical connection box 10 with the electrical connection box 10 mounted on the vehicle body panel 20. Further, since the bladed clips 12A, 12B and/or the protection wall 14 preferably are at least partly pressed into the locking holes 21 and the opening 22 while the squeezable ribs 12d, 13a at the (upper and/or lower) side(s) of the bladed clips 12A, 12B and/or the press-contact piece(s) 13A, 13B and/or the squeezable rib(s) 14a, 14b of the protection wall 14 are squeezed. Thus, the electrical connection box 10 is not shaken by an impact or vibration during the travel of the vehicle, wherefore the breakage of the bladed clips 12A, 12B can be prevented.

Further, since the clearances C2 between the locking steps 12c of the bladed clips 12A, 12B and the vehicle body panel 20 preferably are absorbed or reduced or compensated by the resilient deformations of the spring piece(s) 15 (as preferred biasing member(s)) provided adjacent to, preferably at the substantially opposite sides of the protection wall 14, shaking caused by the clearances C2 can be prevented, wherefore the breakage of the bladed clips 12A, 12B can be prevented.

Furthermore, upon attaching or detaching the relay P1 or fuse P2, the vehicle body panel contact surfaces 16a of the reinforcing ribs 16-1 to 16-4 preferably come substantially into contact with the vehicle body panel 20 to support a force vertically acting on the electrical connection box 10, thereby being able to protect the bladed clips 12A, 12B and prevent the breakage of the bladed clips 12A, 12B. In addition, the offset arrangement of the reinforcing ribs 16 can facilitate die molding.

Accordingly, to prevent shaking movements and the breakage of locking clips by reinforcing a connecting part of a vehicle body panel and an electrical connection box, an electrical connection box is to be fixed only at one end by at least partly inserting one or more locking clips projecting from one side wall of a casing thereof into one or more respective locking holes of a vehicle body panel to be locked in position. The (preferably each) locking clip is a bladed clip in which one or more blade portions are provided preferably folded back or bent substantially toward the opposite sides from (or near) the leading end of a shaft portion projecting from the side wall, and one or more locking steps engageable with the peripheral edge of the locking hole is provided at (or near) the leading ends of the blade portions. One or more, preferably a pair of bladed clips are arranged while being spaced apart, and a protection wall having one or more squeezable ribs projecting from the outer surface(s) thereof is formed adjacent to the bladed clip(s), preferably substantially between these bladed clips, to project from the side wall and is pressed or pressable at least partly into an opening formed adjacent to, preferably substantially between the locking holes of the vehicle body panel substantially corresponding to the (preferably pair of) bladed clips to be fixed while the squeezable rib(s) is/are squeezed.

### LIST OF REFERENCE NUMERALS

- 10: electrical connection box
- 11: casing
11c one side wall
- 12A, 12B: bladed clip (locking clip)
12a shaft portion
12b blade portion
12c locking step
12d squeezable rib
- 13A, 13B: press-contact piece
13a squeezable rib
- 14: protection wall
14a, 14b squeezable rib
- 15: spring piece (biasing member)
- 16: reinforcing rib
- 20: vehicle body panel
- 21: locking hole
- 22: opening

## Claims

1. An electrical connection box (10) to be mounted on a vehicle by being fixed only at one end by at least partly inserting at least one locking clip (12) projecting from one side wall (11c) of a casing (11) thereof into at least one respective locking hole (21) of a vehicle body panel (20) to be locked in position, wherein:
the locking clip (12) is a bladed clip in which one or more blade portions (12b) are provided on a shaft portion (12a) projecting from the side wall (11c);
**characterized in that**
a protection wall (14) having one or more squeezable ribs (14a; 14b) projecting from the outer surface(s) thereof is formed adjacent to the at least one bladed clip (12) to project from the side wall (11c) and is pressable at least partly into an opening (22) formed adjacent to the at least one locking hole (21) of the vehicle body panel (20) corresponding to the at least one bladed clip (12) to be fixed while the one or more squeezable ribs (14a; 14b) are squeezed.

2. A vehicle-mountable electrical connection box according to claim 1, wherein the one or more blade portions (12b) are folded back toward the lateral side, preferably substantially opposite sides, from the leading end of the shaft portion (12a).

3. A vehicle-mountable electrical connection box according to one or more of the preceding claims, wherein one or more locking steps (12c) engageable with the peripheral edge of the locking hole (21) is provided at or near the leading ends of the blade portions (12b).

4. A vehicle-mountable electrical connection box according to one or more of the preceding claims, wherein a pair of bladed clips (12A, 12B) are arranged on the side wall (11c) while being spaced apart.

5. A vehicle-mountable electrical connection box according to claim 4, wherein the protection wall (14) is formed substantially between the bladed clips to project from the side wall (11c) and is pressable at least partly into the opening (22) formed substantially between the locking holes (21) of the vehicle body panel (20) corresponding to the pair of bladed clips (12) to be fixed.

6. A vehicle-mountable electrical connection box according to claim 4 or 5, wherein:
one of the pair of bladed clips (12) is formed with the squeezable rib (12d) at either one of the upper and lower ends of the shaft portion (12a) and has a press-contact piece (13) having the squeezable rib (13a) provided at a position distanced from the other of the upper and lower ends, and the one bladed clip (12) and the corresponding press-contact piece (13) are pressed into contact with the upper and lower inner surfaces of the corresponding locking hole (21) while the squeezable ribs (12d) at the upper and lower sides are squeezed at the time of insertion into the locking hole (21), and
the other bladed clip (12) has a press-contact piece (13) and the squeezable rib (13a) at positions substantially vertically symmetrical with the one bladed clip (12).

7. A vehicle-mountable electrical connection box according to one or more of the preceding claims, wherein one or more biasing members (15), preferably comprising one or more bent spring pieces (15), project at one or more lateral sides of the protection wall (14) and the leading end surface(s) thereof is/are pressable against the outer surface of the vehicle body panel (20).

8. A vehicle-mountable electrical connection box according to one or more of the preceding claims, wherein one or more reinforcing ribs (16) to be pressed against the outer surface of the vehicle body panel (20), preferably from the upper and/or lower surfaces (11d; 11e) of the casing (11), project from the side wall (11c) of the casing (11), preferably from the opposite longitudinal ends of the side wall (11c) of the casing (11), where the one or more bladed clips (12) and the protection wall (14) are provided.

9. A mounting method for mounting an electrical connection box (10) on a vehicle body panel (20) of a vehicle by being fixed only at one end, comprising the following steps:
providing an electrical connection box (10) having at least one locking clip (12) projecting from one side wall (11c) of a casing (11) thereof, wherein the locking clip (12) is a bladed clip in which one or more blade portions (12b) are provided on a shaft portion (12a) projecting from the side wall (11c),
at least partly inserting the at least one locking clip (12) projecting from one side wall (11c) of the casing (11) thereof into at least one respective locking hole (21) of the vehicle body panel (20) to be locked in position,
**characterized by**
at least partly pressing a protection wall (14) having one or more squeezable ribs (14a; 14b) projecting from the outer surface(s) thereof and being formed adjacent to the at least one bladed clip (12) to project from the side wall (11c) into an opening (22) formed adjacent to the at least one locking hole (21) of the vehicle body panel (20) corresponding to the at least one bladed clip (12) to be fixed while the one or more squeezable ribs (14a; 14b) are squeezed.

10. A mounting method according to claim 9, further comprising a step of engaging one or more locking steps (12c) provided at or near the leading ends of the blade portions (12b) with the peripheral edge of the locking hole (21).

11. A mounting method according to claim 9 or 10, wherein a pair of bladed clips (12A, 12B) is provided to be arranged on the side wall (11c) while being spaced apart, and wherein the protection wall (14) is formed substantially between the bladed clips (12) to project from the side wall (11c) and is pressed at least partly into the opening (22) formed substantially between the locking holes (21) of the vehicle body panel (20) corresponding to the pair of bladed clips (12) to be fixed.

## Patentansprüche

1. Elektrischer Verbindungskasten (10), der an einem Fahrzeug zu montieren ist, indem er nur an einem Ende fixiert bzw. befestigt wird, indem zumindest ein Verriegelungsclip (12), der von einer Seitenwand (11c) eines Gehäuses (11) davon vorragt, in zumindest ein jeweiliges Verriegelungsloch (21) einer Fahrzeugkörper- bzw. -aufbauplatte bzw. -paneels (20) eingesetzt wird, die bzw. das in Position zu verriegeln ist, wobei:
der Verriegelungsclip (12) ein beschaufelter Clip bzw. Flügelclip ist, bei dem ein oder mehrere Schaufel- bzw. Flügelabschnitte (12b) an einem Schaftabschnitt (12a) vorgesehen sind, der von der Seitenwand (11c) vorragt;
**dadurch gekennzeichnet, dass**
eine Schutzwand (14) mit einer oder mehreren zusammendrückbaren Rippen (14a; 14b), die von der/den äußeren Fläche(n) bzw. Oberfläche(n) davon vorragen, angrenzend an bzw. benachbart zu dem zumindest einen Flügelclip (12) gebildet ist, um von der Seitenwand (11c) vorzuragen, und zumindest teilweise in eine Öffnung (22) einpressbar ist, die angrenzend an bzw. benachbart zu dem zumindest einen Verriegelungsloch (21) der Fahrzeugaufbauplatte (20) entsprechend dem zumindest einen Flügelclip (12) gebildet ist, der zu fixieren ist, während die eine oder die mehreren zusammendrückbaren Rippen (14a; 14b) zusammengedrückt werden.

2. Fahrzeugmontierbarer elektrischer Verbindungskasten nach Anspruch 1, wobei der eine oder die mehreren Flügelabschnitte (12b) zu der lateralen Seite hin, vorzugsweise im Wesentlichen gegenüberliegenden bzw. entgegengesetzten Seiten, von dem Führungsende des Schaftabschnitts (12a) nach hinten gefaltet bzw. geklappt sind.

3. Fahrzeugmontierbarer elektrischer Verbindungskasten nach einem oder mehreren der vorhergehenden Ansprüche, wobei eine oder mehrere Verriegelungsstufen (12c), die mit der Umfangskante bzw. -rand des Verriegelungslochs (21) in Eingriff bringbar sind, an oder nahe der Führungsenden der Flügelabschnitte (12b) vorgesehen sind.

4. Fahrzeugmontierbarer elektrischer Verbindungskasten nach einem oder mehreren der vorhergehenden Ansprüche, wobei ein Paar beschaufelter Clips bzw. Flügelclips (12A, 12B) an der Seitenwand (11c) angeordnet sind, wo sie voneinander beabstandet sind.

5. Fahrzeugmontierbarer elektrischer Verbindungskasten nach Anspruch 4, wobei die Schutzwand (14) im Wesentlichen zwischen den Flügelclips gebildet ist, um von der Seitenwand (11c) vorzuragen, und zumindest teilweise in die Öffnung (22) einpressbar ist, die im Wesentlichen zwischen den Verriegelungslöchern (21) der Fahrzeugaufbauplatte (20) entsprechend dem Paar Flügelclips (12) gebildet ist, die zu fixieren sind.

6. Fahrzeugmontierbarer elektrischer Verbindungskasten nach Anspruch 4 oder 5, wobei:
einer des Paars Flügelclips (12) mit der zusammendrückbaren Rippe (12d) an einem des oberen und unteren Endes des Schaftabschnitts (12a) gebildet ist und ein Presskontaktstück (13) mit einer zusammendrückbaren Rippe (13a) aufweist, die an einer Position entfernt von dem anderen des oberen und unteren Endes vorgesehen ist, und der eine Flügelclip (12) und das entsprechende Presskontaktstück (13) mit der oberen und unteren Innenfläche bzw. -oberfläche des entsprechenden Verriegelungslochs (21) in Kontakt gepresst werden, während die zusammendrückbaren Rippen (12d) an der oberen und unteren Seite zum Zeitpunkt des Einsetzens in das Verriegelungsloch (21) zusammengedrückt werden, und
der andere Flügelclip (12) ein Presskontaktstück (13) und die zusammendrückbare Rippe (13a) an Positionen im Wesentlichen vertikal symmetrisch zu dem einen Flügelclip (12) aufweist.

7. Fahrzeugmontierbarer elektrischer Verbindungskasten nach einem oder mehreren der vorhergehenden Ansprüche, wobei ein oder mehrere Vorspannglieder (15), vorzugsweise umfassend ein oder mehrere gebogene Federstücke (15), an einer oder mehreren lateralen Seiten der Schutzwand (14) vorragen und die Führungsendfläche(n) bzw. -oberfläche(n) davon gegen die Außenfläche bzw. -oberfläche der Fahrzeugaufbauplatte (20) pressbar ist/sind.

8. Fahrzeugmontierbarer elektrischer Verbindungskasten nach einem oder mehreren der vorhergehenden Ansprüche, wobei eine oder mehrere Verstärkungsrippen (16), die vorzugsweise von der oberen und/oder unteren Fläche bzw. Oberfläche (11d; 11e) des Gehäuses (11) gegen die Außenfläche bzw. -oberfläche der Fahrzeugaufbauplatte (20) zu pressen sind, von der Seitenwand (11c) des Gehäuses (11), vorzugsweise von den gegenüberliegenden bzw. entgegengesetzten Längsenden der Seitenwand (11c) des Gehäuses (11) vorragen, wo der eine oder die mehreren Flügelclips (12) und die Schutzwand (14) vorgesehen sind.

9. Montageverfahren zum Montieren eines elektrischen Verbindungskastens (10) an einer Fahrzeugkörper- bzw. -aufbauplatte bzw. -paneel (20) eines Fahrzeugs an nur einem Ende, umfassend die folgenden Schritte:
Bereitstellen eines elektrischen Verbindungskastens (10), der zumindest einen Verriegelungsclip (12) aufweist, der von einer Seitenwand (11c) eines Gehäuses (11) davon vorragt, wobei der Verriegelungsclip (12) ein beschaufelter Clip bzw. Flügelclip ist, bei dem ein oder mehrere Schaufel- bzw. Flügelabschnitte (12b) an einem Schaftabschnitt (12a) vorgesehen sind, der von der Seitenwand (11c) vorragt,
zumindest teilweises Einsetzen des zumindest einen Verriegelungsclips (12), der von einer Seitenwand (11c) des Gehäuses (11) davon vorragt, in zumindest ein entsprechendes Verriegelungsloch (21) der Fahrzeugaufbauplatte (20), die in Position zu verriegeln ist,
**gekennzeichnet durch**
zumindest teilweisen Einpressen einer Schutzwand (14), die eine oder mehrere zusammendrückbare Rippen (14a; 14b) aufweist, die von der/den äußeren Fläche(n) bzw. Oberfläche(n) davon vorragen, und die angrenzend an bzw. benachbart zu dem zumindest einen Flügelclip (12) gebildet ist, um von der Seitenwand (11c) vorzuragen, in eine Öffnung (22), die angrenzend an bzw. benachbart zu dem zumindest einen Verriegelungsloch (21) der Fahrzeugaufbauplatte (20) entsprechend dem zumindest einen Flügelclip (12) gebildet ist, der zu fixieren ist, während die eine oder die mehreren zusammendrückbaren Rippen (14a; 14b) zusammengedrückt werden.

10. Montageverfahren nach Anspruch 9, ferner umfassend einen Schritt des Ineingriffbringens einer oder mehrerer Verriegelungsstufen (12c), die an oder nahe der Führungsenden der Flügelabschnitte (12b) vorgesehen sind, mit der Umfangskante bzw. -rand des Verriegelungslochs (21).

11. Montageverfahren nach Anspruch 9 oder 10, wobei ein Paar beschaufelter Clips bzw. Flügelclips (12A, 12B) vorgesehen ist, um an der Seitenwand (11c) angeordnet zu werden, wo sie voneinander beabstandet sind, und wobei die Schutzwand (14) im Wesentlichen zwischen den Flügelclips (12) gebildet ist, um von der Seitenwand (11c) vorzuragen, und zumindest teilweise in die Öffnung (22) eingepresst wird, die im Wesentlichen zwischen den Verriegelungslöchern (21) der Fahrzeugaufbauplatte (20) entsprechend dem Paar Flügelclips (12) gebildet ist, die zu fixieren sind.

## Revendications

1. Boîtier de connexion électrique (10) pour être installé sur un véhicule en étant fixé seulement à une extrémité en insérant au moins partiellement au moins une attache de verrouillage (12) dépassant d'une paroi latérale (11c) d'une boîte (11) de celui-ci dans au moins un trou de verrouillage respectif (21) d'un panneau de carrosserie de véhicule (20) pour être verrouillé en position, dans lequel :
l'attache de verrouillage (12) est une attache à lamelles dans laquelle une ou plusieurs portions de lamelles (12b) sont fournies sur une portion de tige (12a) dépassant de la paroi latérale (11c);
**caractérisé en ce**
**qu'**une paroi de protection (14) présentant une ou plusieurs nervures compressibles (14a ; 14b) dépassant de la/des surface(s) extérieure(s) de celle-ci est formée adjacente à la au moins une attache à lamelles (12) pour dépasser de la paroi latérale (11c) et peut être pressée au moins partiellement dans une ouverture (22) formée adjacente au au moins un trou de verrouillage (21) du panneau de carrosserie de véhicule (20) correspondant à la au moins une attache à lamelles (12) pour être fixée tandis que la ou les plusieurs nervures compressibles (14a ; 14b) sont comprimées.

2. Boîtier de connexion électrique pour installation sur véhicule selon la revendication 1, dans lequel la ou les plusieurs portions de lamelles (12b) sont repliées vers le côté latéral, de préférence à des côtés essentiellement opposés, depuis l'extrémité avant de la portion de tige (12a).

3. Boîtier de connexion électrique pour installation sur véhicule selon une ou plusieurs des revendications précédentes, dans lequel un ou plusieurs gradins de verrouillage (12c) pouvant être amenés en prise avec le bord périphérique du trou de verrouillage (21) est fourni sur ou à proximité des extrémités avant des portions de lamelles (12b).

4. Boîtier de connexion électrique pour installation sur véhicule selon une ou plusieurs des revendications précédentes, dans lequel une paire d'attaches à lamelles (12A, 12B) est disposée sur la paroi latérale (11c) de manière espacée l'une de l'autre.

5. Boîtier de connexion électrique pour installation sur véhicule selon la revendication 4, dans lequel la paroi de protection (14) est formée essentiellement entre les attaches à lamelles pour dépasser de la paroi latérale (11c) et peut être pressée au moins partiellement dans l'ouverture (22) formée essentiellement entre les trous de verrouillage (21) du panneau de carrosserie de véhicule (20) correspondant à la paire d'attaches à lamelles (12) à fixer.

6. Boîtier de connexion électrique pour installation sur véhicule selon la revendication 4 ou 5, dans lequel :
l'une parmi la paire d'attaches à lamelles (12) est formée avec la nervure compressible (12d) soit à l'extrémité supérieure soit à l'extrémité inférieure de la portion de tige (12a) et a une pièce de pression-contact (13) présentant la nervure compressible (13a) fournie à une position distancée de l'autre extrémité supérieure ou inférieure, et l'attache à lamelles (12) et la pièce de pression-contact (13) correspondante sont pressées pour venir en contact avec les surfaces intérieures supérieure et inférieure du trou de verrouillage (21) correspondant, tandis que les nervures compressibles (12d) sur les côtés supérieur et inférieur sont comprimées au moment de l'insertion dans le trou de verrouillage (21), et
l'autre attache à lamelles (12) présente une pièce de pression-contact (13) et la nervure compressible (13a) à des positions essentiellement symétriques verticalement à l'attache à lamelles (12).

7. Boîtier de connexion électrique pour installation sur véhicule selon une ou plusieurs des revendications précédentes, dans lequel un ou plusieurs éléments de précontrainte (15), de préférence comprenant une ou plusieurs pièces courbées de ressort (15), dépassent à un ou plusieurs côtés latéraux de la paroi de protection (14) et la/les surface(s) d'extrémité avant de celle-ci peut/peuvent être pressée(s) contre la surface extérieure du panneau de carrosserie de véhicule (20).

8. Boîtier de connexion électrique pour installation sur véhicule selon une ou plusieurs des revendications précédentes, dans lequel une ou plusieurs nervures de renforcement (16) à presser contre la surface extérieure du panneau de carrosserie de véhicule (20), de préférence depuis les surfaces supérieure et/ou inférieure (11d ; 11e) de la boîte (11), dépassent de la paroi latérale (11c) de la boîte (11), de préférence des extrémités longitudinales opposées de la paroi latérale (11c) de la boîte (11), où la ou les attaches à lamelles (12) et la paroi de protection (14) sont fournies.

9. Procédé d'installation pour installer un boîtier de connexion électrique (10) sur un panneau de carrosserie de véhicule (20) d'un véhicule en étant fixé seulement à une extrémité, comprenant les étapes consistant à :
fournir un boîtier de connexion électrique (10) présentant au moins une attache de verrouillage (12) dépassant d'une paroi latérale (11c) d'une boîte (11) de celui-ci, dans lequel l'attache de verrouillage (12) est une attache à lamelles dans laquelle une ou plusieurs portions de lamelle (12b) sont fournies sur une portion de tige (12a) dépassant de la paroi latérale (11c),
au moins partiellement insérer la au moins une attache de verrouillage (12) dépassant d'une paroi latérale (11c) de la boîte (11) de celui-ci dans au moins un trou de verrouillage (21) respectif du panneau de carrosserie de véhicule (20) à fixer en position,
**caractérisé par**
au moins partiellement presser une paroi de protection (14) présentant une ou plusieurs nervures compressibles (14a ; 14b) dépassant de la/des surface(s) de celle-ci et étant formée adjacente à la au moins une attache à lamelles (12) pour dépasser de la paroi latérale (11c) dans une ouverture (22) formée adjacente au au moins un trou de verrouillage (21) du panneau de carrosserie de véhicule (20) correspondant à la au moins une attache à lamelles (12) à fixer tandis que la ou les nervures compressibles (14a ; 14b) sont comprimées.

10. Procédé d'installation selon la revendication 9, comprenant en outre une étape consistant à amener en prise un ou plusieurs gradins de verrouillage (12c) fournis sur ou à proximité des extrémités avant des portions de lamelles (12b) avec le bord périphérique du trou de verrouillage (21).

11. Procédé d'installation selon la revendication 9 ou 10, dans lequel une paire d'attaches à lamelles (12A, 12B) est fournie pour être disposée sur la paroi latérale (11c) de manière espacée l'une de l'autre, et dans lequel la paroi de protection (14) est formée essentiellement entre les attaches à lamelles (12) pour dépasser de la paroi latérale (11c) et est pressée au moins partiellement dans l'ouverture (22) formée essentiellement entre les trous de verrouillage (21) du panneau de carrosserie de véhicule (20) correspondant à la paire d'attaches à lamelles (12) à fixer.
